# EUROPÄISCHE PATENTSCHRIFT

(11) **EP 1 250 632 B1**
(45) Veröffentlichungstag und Bekanntmachung des Hinweises auf die Patenterteilung: **19.01.2005**
(21) Anmeldenummer: 00906247.2
(22) Anmeldetag: 29.01.2000
(51) Int. Cl.: G05B 19/418

(54) **SYSTEM UND VERFAHREN ZUR ERMITTLUNG DER PRODUKTIONSANLAGEN-EFFEKTIVITÄT, VON FEHLEREREIGNISSEN UND DER FEHLERURSACHEN**
SYSTEM AND METHOD FOR DETERMINING THE OVERALL EQUIPMENT EFFECTIVENESS OF PRODUCTION PLANTS, FAILURE EVENTS AND FAILURE CAUSES
SYSTEME ET PROCEDE POUR DETERMINER L'EFFICACITE D'UNITES DE PRODUCTION, DES EVENEMENTS D'ERREURS ET LA CAUSE DESDITES ERREURS

(43) Veröffentlichungstag der Anmeldung: 23.10.2002
(73) Patentinhaber: ABB Research Ltd., 8050 Zürich (CH)
(72) Erfinder: KALLELA, Jari, B-1310 La Hulpe (BE); VOLLMAR, Gerhard, D-67149 Meckenheim (DE); GREULICH, Manuel, D-77709 Oberwolfach (DE); MILANOVIC, Raiko, D-69121 Heidelberg (DE)
(74) Vertreter: Miller, Toivo
(86) Internationale Anmeldenummer: PCT/EP2000/000713
(87) Internationale Veröffentlichungsnummer: WO 2001/055805

(56) Entgegenhaltungen:
- EP-A- 0 482 522
- WO-A-99/15710
- US-A- 5 067 099
- US-A- 5 914 879
- SRINIVASAN M ET AL: "PERFORMANCE AND PRODUCTIVITY IMPROVEMENTS IN AN ADVANCED DIELECTRIC ETCH REACTOR FOR SUB 0.3UM APPLICATIONS" , IEEE/SEMI ADVANCED SEMICONDUCTOR MANUFACTURING CONFERENCE AND WORKSHOP,US,NEW YORK, NY: IEEE, VOL. CONF. 9, PAGE(S) 419-422 XP000850451 ISBN: 0-7803-4381-6 das ganze Dokument

## Beschreibung

Die Erfindung bezieht sich auf ein System und ein Verfahren zur Ermittlung der Effektivität (Overall Equipment Effectiveness OEE) von Produktionsanlagen, von Fehlerereignissen und der Ursachen der wesentlich zu Produktivitätsverlusten beitragenden Fehlerereignissen.

Unter Effektivität wird hier der Begriff "Overall Equipment Effectiveness, OEE" verstanden, der beispielsweise beschrieben ist in Robert Hansen: Learning the Power of Overall Equipment Effectivineess, im Konferenzbericht 1999 Machinery Reliability Conference and Exposition, "The Meeting of Machinery Reliability Minds", April 12-14, Chincinnati, Ohio, Seiten 19 bis 30, herausgegeben von Industrial Communications, Inc., 1704 Natalie Nehs Dr., Knoxville, TN 37931.

OEE ist demnach eine Methode zur Ermittlung einer Prozentzahl die angibt, inwieweit die jeweils tatsächliche Produktivität an eine geplante, also vorgegebene Produktivität heranreicht. OEE wird auch als Multiplikation synergetischer Parameter bezeichnet, die die "Gesundheit" eines Prozesses definieren, nämlich OEE = Verfügbarkeit x Verarbeitungsgeschwindigkeit x Qualität.

Betreiber von Produktionsanlagen sind aus wirtschaftlichen Gründen, sowie zur Sicherung der Produktqualität daran interessiert, eine im ungestörten Betrieb erreichbare Soll-Effektivität zu ermitteln und die jeweils aktuelle Effektivität damit zu vergleichen. Weicht die aktuelle Effektivität vom Sollwert ab, so bedeutet dies Produktivitätsverluste. Es ist dann zu ermitteln, welche Fehlerereignisse vorliegen und was dafür ursächlich ist. Ursachen können ihre Wurzeln im physikalischen, menschlichen oder organisatorischen Bereich haben.

Für die Analyse von Fehlern (im Sinne von Produktivitätsverlusten) können unterschiedliche Methoden und Techniken eingesetzt werden. Die wichtigsten Vertreter sind FMEA (Failure Modes and Effects Analysis), Fault Tree Analysis, oder statistische Auswerteverfahren, wie beispielsweise die Pareto-Analyse [John Moubray, RCM2, Butterworth-Heinemann, Second Edition 1997].

Bei der Durchführung einer FMEA wird in folgenden Schritten vorgegangen:
1. Funktionale Zerlegung der Anlage
2. Beschreibung von Haupt- und Nebenfunktion
3. Beschreiben und Auflisten von funktionalen Fehlerzustände
4. Ermittlung sämtlicher Ursachen für jeden Fehlerzustand
5. Bestimmung der Auswirkungen auf die Produktionsziele
6. Quantitative Bewertung der Auswirkungen.

Die Fehlerbaumanalyse geht von einem unerwünschten TOP-Zustand aus. Für dieses Ausgangsereignis werden sämtliche Ereignissituationen ermittelt, die zu diesem Zustand führen.

Statistische Verfahren setzen eine geeignete Basis von Daten aus der Produktion voraus. Beispielsweise können mit einer Pareto-Analyse, diejenigen Fehlerursachen ermittelt werden, die für die wesentlichen Produktionsfehler verantwortlich sind. FMEA und Fehlerbaumanalyse können durch Werkzeuge unterstützt werden. Solche Werkzeuge führen den Benutzer schrittweise durch die Methode, Unterstützen bei der Datenerfassung und dokumentieren die Ergebnisse.

Die statistischen Verfahren setzen allerdings eine geeignete Datenbasis voraus, die oftmals nicht vorhanden ist. Entweder werden überhaupt keine Daten aus der Produktion aufgezeichnet oder aber es werden nicht die Informationen erfaßt, die für eine Fehleranalyse notwendig wären.

Die vorgenannten Verfahren haben ihre Wurzeln in der Konstruktionslehre, d.h. sie werden eingesetzt um ein Produkt oder eine Anlage möglichst ausfallsicher auszulegen. Der erreichte hohe Qualitätsstandard des Produktes rechtfertigt den erheblichen Zeit- und Arbeitsaufwand für solche Analysen.

Die ,post-mortem' Analyse von Verlusten und Fehlern in einer Produktionsanlage ist oftmals zeitkritisch, da der anhaltende Produktivitätsverlust mit erheblichen Kosten verbunden ist. Ein weiterer Nachteil ist der, daß die Verfahren keine auf die aktuelle Störungsursache fokusierte Vorgehensweise unterstützen.

Aus der Literatur ist bekannt, daß zwischen Fehlereignis und eigentlicher Fehlerursache bis zu 7 Ursachenebenen liegen können [John Moubray, RCM2, Butterworth-Heinemann, Second Edition 1997]. Keines der bekannten Verfahren kann angeben, wann die geeignete Ebene gefunden ist, die eine nachhaltige Beseitigung der Fehlerursache sicherstellt.

Weiterhin sind aus US 5067099 A ein Verfahren und eine Einrichtung bekannt, wobei mit einer Vielzahl definierter und gespeicherter Ereignisse gearbeitet wird. Jedes dieser Ereignisse bezieht sich auf ein Ereignis, das während des Betriebs auftreten kann und durch bestimmte andere Ereignisse definiert ist, die vorher eintreten müssen, sowie durch eine oder mehrere Parametersituationen, die vorher auftreten müssen. Dazu werden Betriebsdaten erfaßt und es wird eine Ereigniserkennung durchgeführt. Zur Ereigniserkennung wird ein Vergleich der erfaßten Daten mit gespeicherten Daten durchgeführt. Die Einrichtung ist außerdem dafür eingerichtet, abhängig vom jeweils erkannten Ereignis Aktionen zu definieren, um eine Änderung von Systemeigenschaften zu bewirken.

Im Aufsatz Srinivasan M. et al., "Performance and Productivity Improvements in an Advanced Dielectric Etch Reactor for 0.3 um Applications", 1998 IEEE/SEMI Advanced Semiconductor Manufacturing Converence and Workshop, US, New York, IEEE, Vol. Conf. 9, Pages 419-422 XP000850451 ISBN: 0-7803-4381-6 werden in offline-Analysen OEE- und COO(Cost of Ownership)-Methoden zur Produktverbesserung benutzt.

Weitere Methoden zur Überwachung und Beurteilung von Fertigungsprozessen enthalten WO 99 15710 A, EP 0 482 522 A und US 5914879 A.

Ausgehend von US 5 067 099 A liegt der Erfindung die Aufgabe zugrunde, ein Verfahren sowie ein System anzugeben, das eine automatisierte Ermittlung der aktuellen Effektivität, der Fehlerereignisse und der Fehlerursachen ermöglicht.

Diese Aufgabe wird durch ein System zur Ermittlung der Effektivität von Produktionsanlagen unterschiedlichen Typs, von signifikanten Fehlerereignissen und der zugrundeliegenden Ursachen gelöst, das die im Anspruch 1 angegebenen Merkmale aufweist. Vorteilhafte Ausgestaltungen sind in weiteren Ansprüchen angegeben.

Die Aufgabe wird außerdem gelöst durch ein im Anspruch 9 angegebenes Verfahren zum automatisierten Ermitteln der Effektivität einer Produktionsanlage, signifikanter Fehlerereignisse und der Ursachen.

Das erfindungsgemäße System enthält eine Serviceeinrichtung, die vorzugsweise als mobile Einrichtung ausgeführt ist und jeweils an einen Datenserver im Leitsystem einer Produktionsanlage anschließbar ist. Sowohl das benutzte Verfahren als auch die Ausführung als System basieren auf der Verwendung von vorkonfigurierten Lösungsmodellen. Solche Lösungsmodelle lassen sich mittels eines Offline-Systemteils festlegen und in einem Online-Systemteil anwenden.

Die Serviceeinrichtung läßt sich auf vorteilhafte Weise zur Ursachenanalyse in unterschiedlichen Produktionseinlagen einsetzen, beispielsweise sowohl zur Analyse der Ursachen von Produktivitätseinbußen oder mangelhafter Produktqualität bei der Papierherstellung als auch bei Ab üllanlagen zur Abfüllung von Flüssigkeiten in der Nahrungsmittelindustrie. Diese universelle Einsetzbarkeit wird durch eine Reihe generischer Modelle sowie durch vorkonfigurierte Bewertungs- und Fehlermodelle erreicht.

Eine weitere Beschreibung der Erfindung und deren Vorteile erfolgt nachstehend anhand von Ausführungsbeispielen, die in Zeichnungsfiguren dargestellt sind.

Es zeigen:
- Fig. 1: Blockschema eines erfindungsgemäßen Systems zur Ermittlung von Effektivität, Fehlerereignissen und Fehlerursachen,
- Fig. 2: die Komponenten von Online- und Offline-Systemteilen des Systems gemäß Fig. 1,
- Fig. 3: eine Darstellung der Arbeitsweise des Systems,
- Fig. 4: eine typische OEE-Anzeige einschließlich einer Darstellung zur Alarmbildung,
- Fig. 5: ein OEE-Skript für die Verifikation von Fehlerhypothesen,
- Fig. 6: ein Beispiel zu Daten, die aus einem Steuerungs- oder Leitsystem abrufbar sind,
- Fig. 7: ein Beispiel einer Struktur einer Fehlerdatenbank,
- Fig. 8: beispielhafte Ereigniskategorien,
- Fig. 9: ein Beispiel eines Bewertungsmodells,
- Fig. 10: ein beispielhaftes Ergebnis einer Pareto-Analyse,
- Fig. 11: Beschreibungsdaten für ein Fehlermodell,
- Fig. 12: ein Fehlermodell zu einem Fehlerereignis "Ölpumpe Aus", und
- Fig. 13: eine typische OEE-Berechnungsformel.

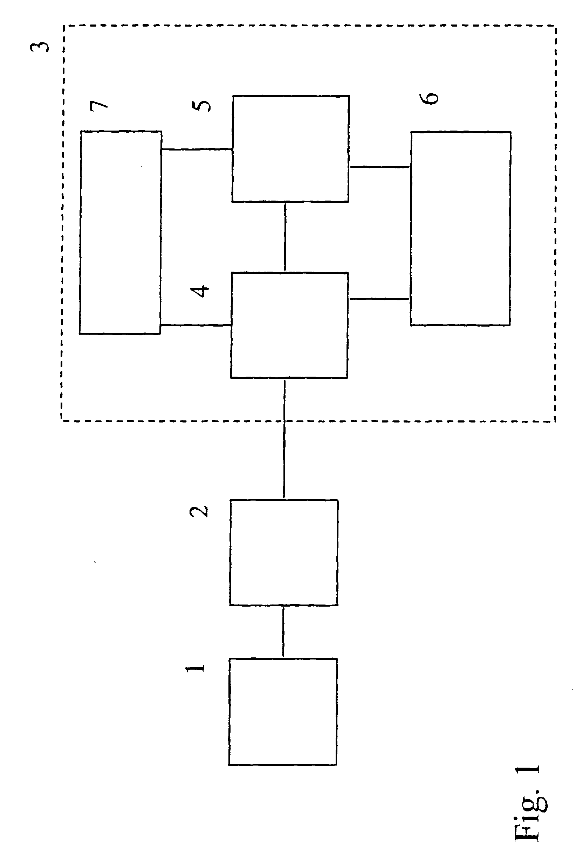

Das Blockschema gemäß Fig. 1 zeigt eine Produktionsanlage 1, die mit einer Datenerfassungseinrichtung 2 verbunden ist. Die Produktionsanlage 1 kann eine einzelne Maschine oder eine komplexe Anlage mit einer Vielzahl von Produktionseinrichtungen sein. Es kann sich um Produktionsanlagen unterschiedlichen Typs handeln, beispielsweise eine Papiermaschine, eine Brauerei, bzw. deren Abfüllanlage, oder eine Produktionsanlage im Bereich der Kraftfahrzeugfertigung.

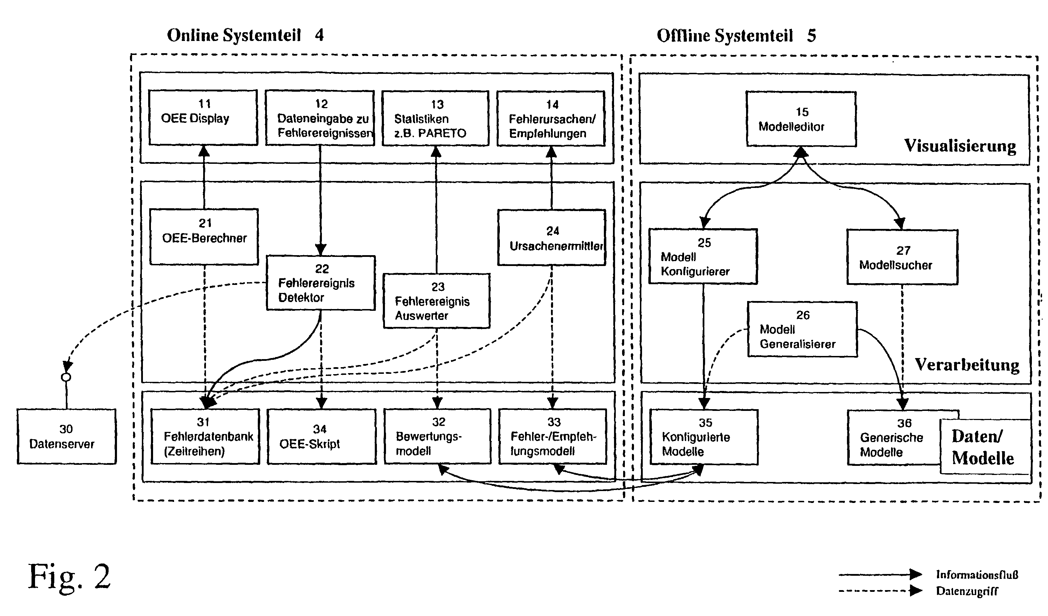

Die Datenerfassungseinrichtur g 2 enthält einen Datenserver 30 (vergl. Fig. 2), der für Analysezwecke benötigte Daten bereitstellt, beispielsweise Daten aus einem Leitoder Steuerungssystem, einern Produktionsplanungssystem oder Instandhaltungssystem.

Zur Effektivitätsermittlung, Fehleranalyse und Ursachenanalyse ist eine Serviceeinrichtung 3 an den Datenserver 30 der Datenerfassungseinrichtung 2 vorübergehend anschließbar oder dauerhaft angeschlossen.

Die Serviceeinrichtung 3 enthält einen Online-Systemteil 4 und einen Offline-Systemteil 5, wobei der Online-Systemteil 4 mit der Datenerfassungseinrichtung 2 und mit dem Offline-Systemteil 5 verbunden ist. Es sind außerdem Eingabemittel 6 und Anzeigemittel 7 vorhanden, die jeweils mit den Systemteilen 4, 5 verbunden sind. Eine Beschreibung dieser Komponenten der Serviceeinrichtung erfolgt nachstehend anhand der Fig. 2.

Fig. 2 zeigt den Online-Systemteil 4 und den Offline-Systemteil 5 der Serviceeinrichtung 3.

Der Online-Systemteil 4 ermöglicht eine automatisierte Ermittlung der Effektivität OEE, relevanter Fehlerereignisse und der Fehlerursachen. Er enthält dazu einen OEE-Berechner 21, der dafür eingerichtet ist, auf Daten zuzugreifen, die in einer Fehlerdatenbank 31 bereitgestellt sind. Ergebnisse der OEE-Berechnung sind in einem OEE-Display 11 anzeigbar.

Ein Fehlerereignisdetektor 22 ist dafür eingerichtet, Daten aus dem Datenserver 30 abzurufen, sowie auf ein OEE-Skript 34 zuzugreifen, das die Kriterien für die Fehlerereignisse enthält, und zur Fehlerereignis-Detektion außerdem zusätzliche Informationen zu berücksichtigen, die mittels einer Dateneingabe 12 eingebbar sind. Ermittelte Fehlerereignisse sind vom Fehlerereignisdetektor 22 in der Fehlerdatenbank 31 als Zeitreihen ablegbar.

Ein Fehlerereignisauswerter 23 ist dafür eingerichtet, auf die Fehlerereignis-Zeitreihen in der Fehlerdatenbank 31 zuzugreifen, unter Verwendung eines konfigurierten Bewertungsmodells 32 die einzelnen Fehlerereignisse zu bewerten, und Ergebnisse mittels einer Statistiken-Anzeige 13 anzuzeigen.

Ein Fehlerursachenermittler 24 greift auf die Fehlerdatenbank 31 sowie auf ein konfiguriertes Fehler- und Empfehlungs-Modell 33 zu und zeigt ermittelte Fehlerursachen und gegebenenfalls auch Empfehlungen zur Fehlerbehebung in einer Fehlerursachenanzeige 14 an.

Der Offline-Systemteil 5 ist dafür eingerichtet, mittels eines Modelleditors 15 und eines Modellsuchers 27 aus einem Vorrat generischer Modelle 36 das am besten geeignete Modell aufzusuchen und anzupassen.

Mittels eines Modellkonfigurierers 25 konfigurierte Modelle 35 sind lokal in der Serviceeinrichtung 3 ablegbar. Sie können auch über ein geeignetes Interface lokal verteilt extern gespeichert werden. Mittels eines Modellgenerierers 26 sind konfigurierte Modelle 35 speicherbar. Im Offline-Systemteil 5 und im Offline-Betrieb erarbeitete konfigurierte Modelle 35 werden dem Online-Systemteil 4 als konfigurierte Bewertungsmodell 32 bzw. Fehlermodell 33 zur Verfügung gestellt.

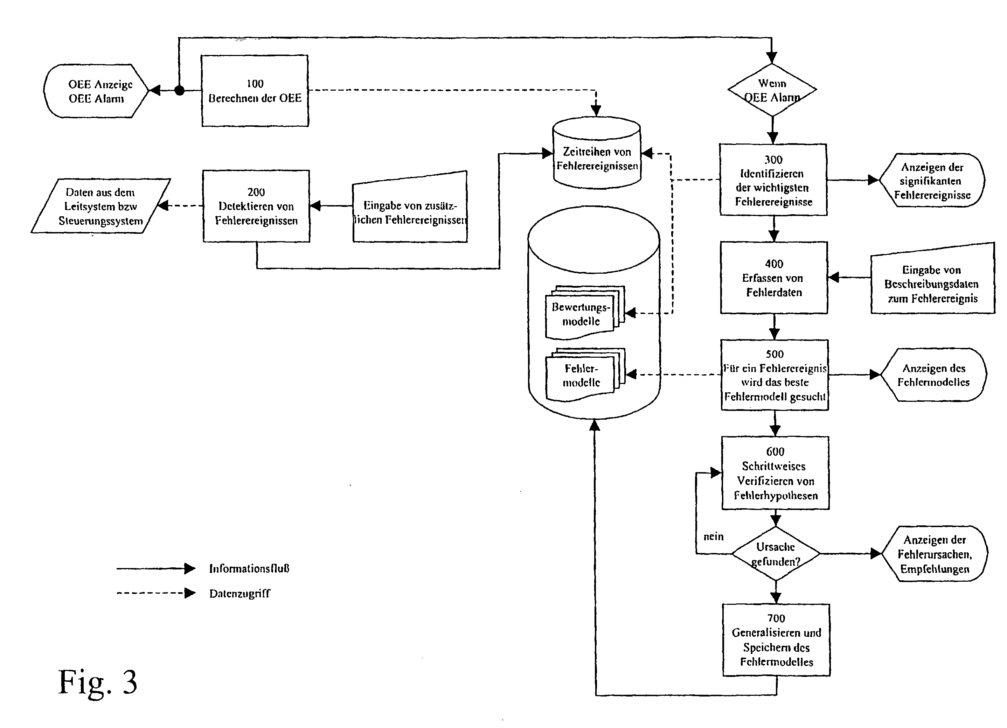

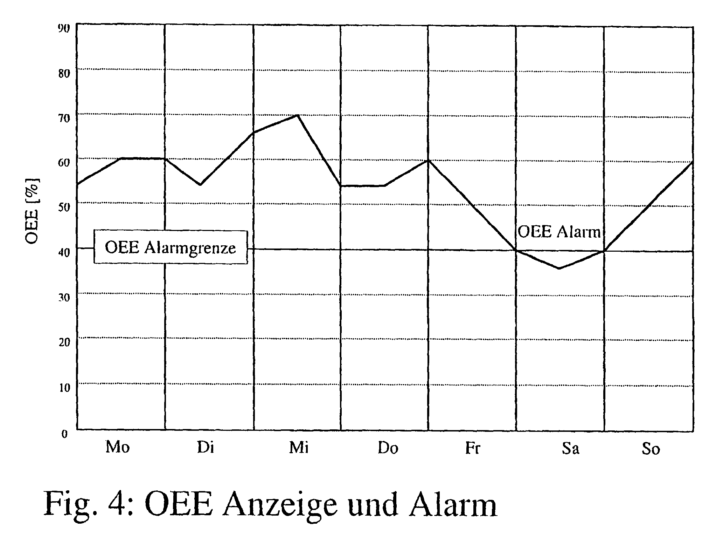

Anhand der Fig. 3 wird nachstehend in Verbindung mit den Darstellungen in den Fig. 4 bis 12 die Arbeitsweise des Systems erläutert.

Fig. 3 zeigt die einzelnen Schritte des Verfahrens zum automatisierten Ermitteln der Effektivität einer Produktionsanlage, signifikanter Fehlerereignisse und der Ursachen einer von einem vorgegebenen Sollzustand abweichenden Effektivität.

Im Schritt 200 wird auf Daten aus dem Leit- oder Steuerungssystem, also dem Datenserver 30 (vergl. Fig.2) zugegriffen, und es erfolgt eine Detektion von Fehlerereignissen, die in der Fehlerdatenbank 31 (vergl. Fig.2) abgelegt werden.

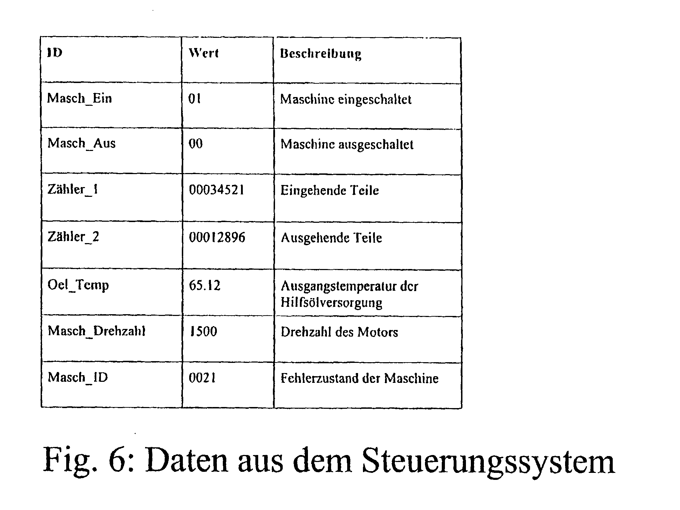

Einen typischen abrufbaren Datensatz zeigt Fig. 6. Er besteht im einfachsten Fall aus einem Identifikator (ID) für das Signal und seinem Wert. Je nach System können zusätzliche Informationen wie Datentyp, Beschreibungsdaten und Systemzeit zugreifbar sein. Zur Berechnung der OEE werden häufig Signale zum Status der Maschine, Zählerstände und Motordrehzahlen abgefragt. Zur Dokumentation von Störungen sind zusätzlich Meßwerte von physikalischen Größen und Fehlerzustands-Signale hilfreich.

Im Schritt 100 erfolgt auf der Grundlage der abgerufenen Daten und Fehlerereignisse, sowie aufgrund einer implementierten OEE-Formel eine Berechnung der OEE-Zahl.

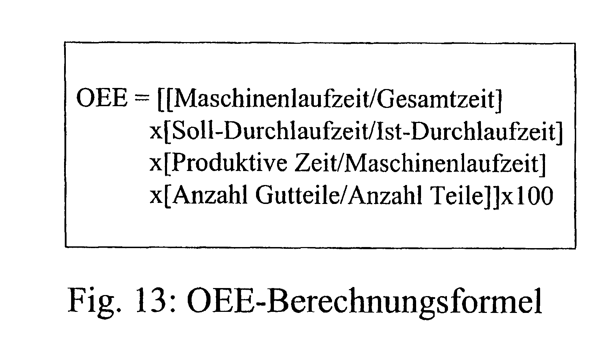

Fig. 13 zeigt eine typische Berechnungsformel für die OEE. Diese OEE-Formel ist für eine spezielle Anlage konfigurierbar. Im Beispiel stellt die erste Zeile in der Formel die Verfügbarkeitskomponente, die zweite und dritte Zeile die Performancekomponente und die vierte Zeile die Qualitätskomponente der OEE dar. Die Gesamt-OEE ergibt sich aus dem Produkt der Einzelkomponenten. Typischerweise wird die OEE in Prozent angegeben.

Das Berechnungsergebnis wird im OEE-Display 11 (vergl. Fig. 2) angezeigt. Fig. 4 zeigt ein Beispiel für eine OEE-Anzeige, wobei die OEE in Prozent berechnet und als Trend für eine Woche dargestellt ist. Außerdem ist eine Alarmbildung dargestellt. Die OEE-Alarmgrenze ist bei 40% einbestellt. Beim Unterschreiten des Grenzwertes wechselt beispielsweise der OEE-Trend zum Zweck der visuellen Alarmierung die Farbe.

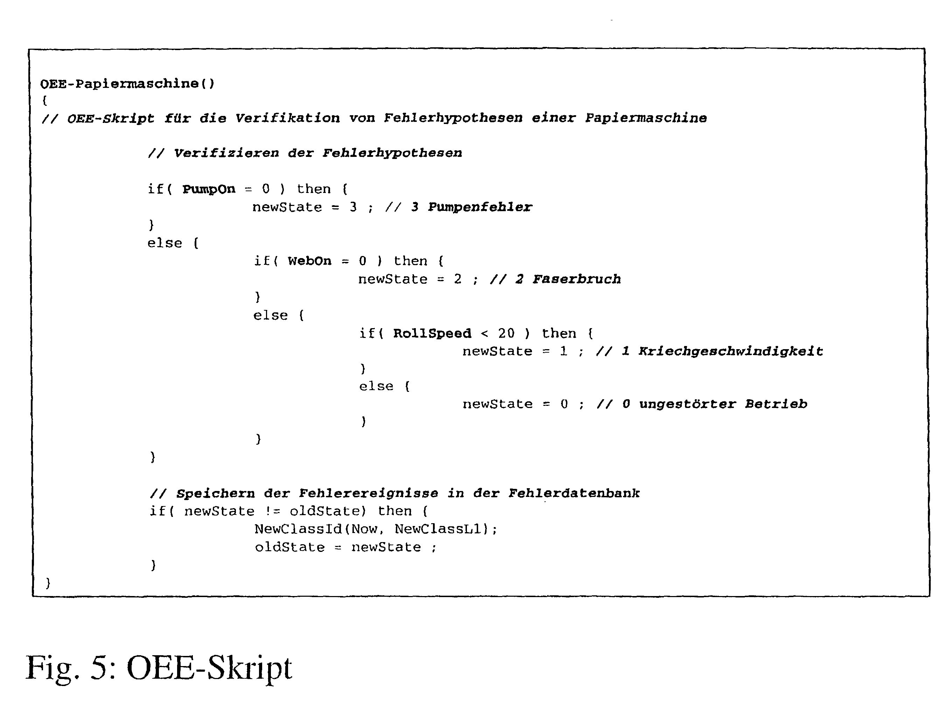

Im Schritt 200 werden die Daten aus dem Steuerungssystem bzw. Leitsystem entsprechend der Kriterien in einem OEE-Skript nach Fehlerereignissen durchsucht. Ein Beispiel für ein solches OEE-Skripts zur Verifikation von Fehlerhypothesen einer Papiermaschine zeigt Fig. 5. Erkannte Fehlerereignisse werden in der Fehlerdatenbank 31 (Fig. 2) gespeichert.

In der Fehlerdatenbank 31 können zusätzliche, durch einen Benutzer eingegebene Fehlerereignisse gespeichert sein.

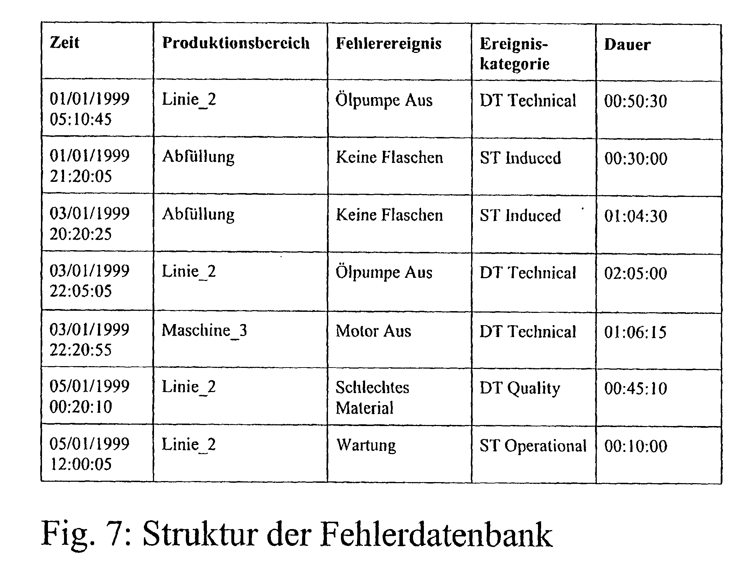

Fig. 7 zeigt beispielhaft Informationen, die in der Fehlerdatenbank 31 gespeichert werden. Die Datensätze werden chronologisch als Historien abgelegt. Ein Datensatz besteht aus einem sogenannten Zeitstempel (Datum und Uhrzeit), dem Produktionsbereich, in dem das Fehlerereignis aufgetreten ist, der Beschreibung des Fehlerereignisses und der entsprechenden Ereigniskategorie sowie der Dauer des Ereignisses.

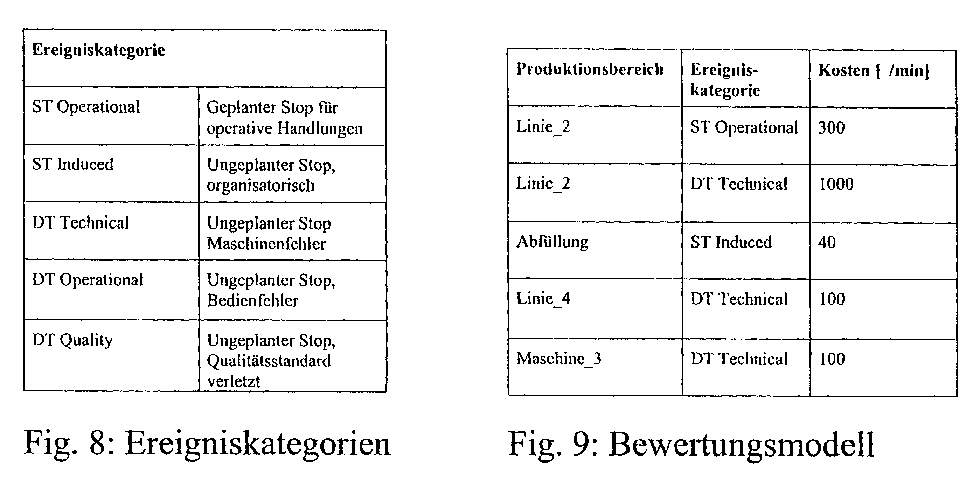

### Fig. 8 zeigt Beispiele für Ereigniskategorien:

ST Operational kennzeichnet einen geplanten Stop der Produktion für operative Handlungen, wie Umrüsten von Maschinen oder Standardtests.
ST Induced kennzeichnet ungeplante Stops durch externe Einflüsse (nicht durch die technische Anlage), wie zu wenig Material, zu wenig Personal, ungeplante Besprechungen.
DT Technical kennzeichnet sämtliche ungeplante Stops durch Gerätefehler oder Instandhaltungsfehler.
DT Operational kennzeichnet ungeplante Stops infolge qualitativ unzureichender Rohmaterialien und Hilfsstoffe sowie infolge ungeplanter Tests oder Schmutz, verursacht durch den Prozeß oder dem Produkt.

Falls im OEE Display ein Alarm angezeigt und eine Alarmmeldung ausgelöst wird, beginnt mit Schritt 300 eine Ursachenanalyse. Dabei werden zuerst unter Zugriff auf die Fehlerdatenbank 31 und des konfigurierten Bewertungsmodells 32 (Fig. 2) die signifikanten Fehlerereignisse identifiziert. Innerhalb eines gewählten Zeitabschnitts liegende Fehlerereignisse werden hinsichtlich der verursachten Kosten mit einer Pareto-Analyse unter Zuhilfenahme des Bewertungsmodells 32 statistisch ausgewertet.

Fig. 9 zeigt ein Beispiel für ein Bewertungsmodell 32. Das Bewertungsmodell gibt an, welche Kosten pro Zeiteinheit durch die Stillstände von bestimmten Produktbereichen/Maschinen verursacht werden. In dem beispielhaften Bewertungsmodell werden die Kosten außerdem von der Ereigniskategorie bestimmt.

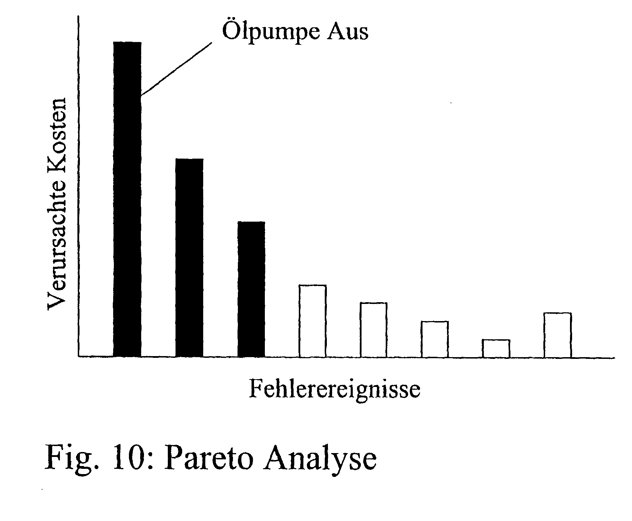

Fig. 10 zeigt beispielhaft das Ergebnis einer durchgeführten Pareto-Analyse. Die Pareto-Anlayse summiert die verschiedenen Fehlerereignisse und nimmt eine Bewertung hinsichtlich der verursachten Kosten vor. Dadurch werden die signifikanten Fehlerereignisse identifiziert. Eine mögliche Form der Visualisierung kann, wie im Beispiel gezeigt, durch ein Ba kendiagramm vorgenommen werden. Im Beispiel verursacht das Fehlerereignis "Ölpumpe Aus" die höchsten Kosten.

Für ein bestimmtes Fehlerereigrvis, dessen Fehlerursache zu analysieren sind, werden im Schritt 400 die notwendigen Daten erfaßt.

Im Schritt 500 wird mit Daten, die das Fehlerereignis beschreiben, auf ein Fehlermodell in der Bibliothek zugegriffen. Im automatisiert ablaufenden Online-Betrieb wird das vorher konfigurierte Fehlermodell 33 (Fig. 2) verwendet. Im Offline-Betrieb kann das am besten passende Fehlermodell gesucht und dem Benutzer visualisiert werden. Er kann dann das Modell editieren.

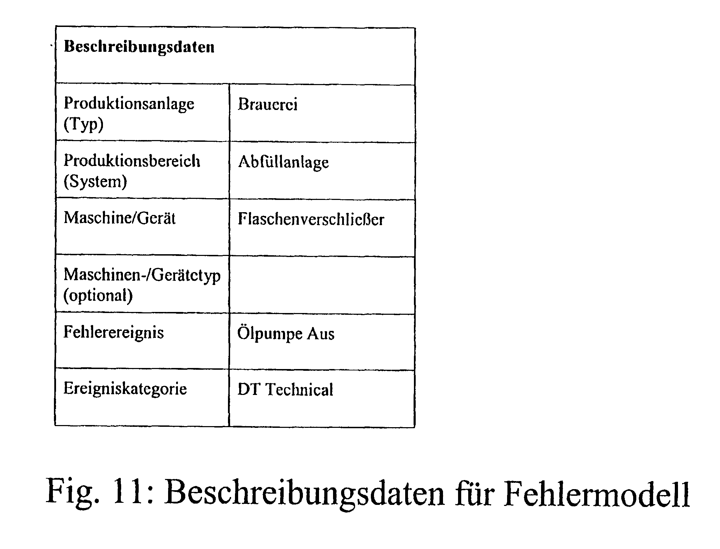

Fig. 11 zeigt beispielhaft Beschreibungsdaten für ein Fehlermodell zu dem Fehlerereignis "Ölpumpe Aus". Die Beschreibungsdaten dienen dazu, das Fehlermodell in einer Bibliothek strukturiert abzulegen. Werden die Modelle wieder benötigt, kann mit einer Suchanfrage auf die Fehlermodelle zugegriffen werden. Typische Beschreibungsdaten für ein Fehlermodell ergeben sich aus der Bezeichnung des Fehlerereignisses, seiner Kategorie sowie des technischen Umfeldes, wie Typ der Produktionsanlage, Produktionsbereich und weiter verfeinert Maschine und Gerät und deren Typisierung.

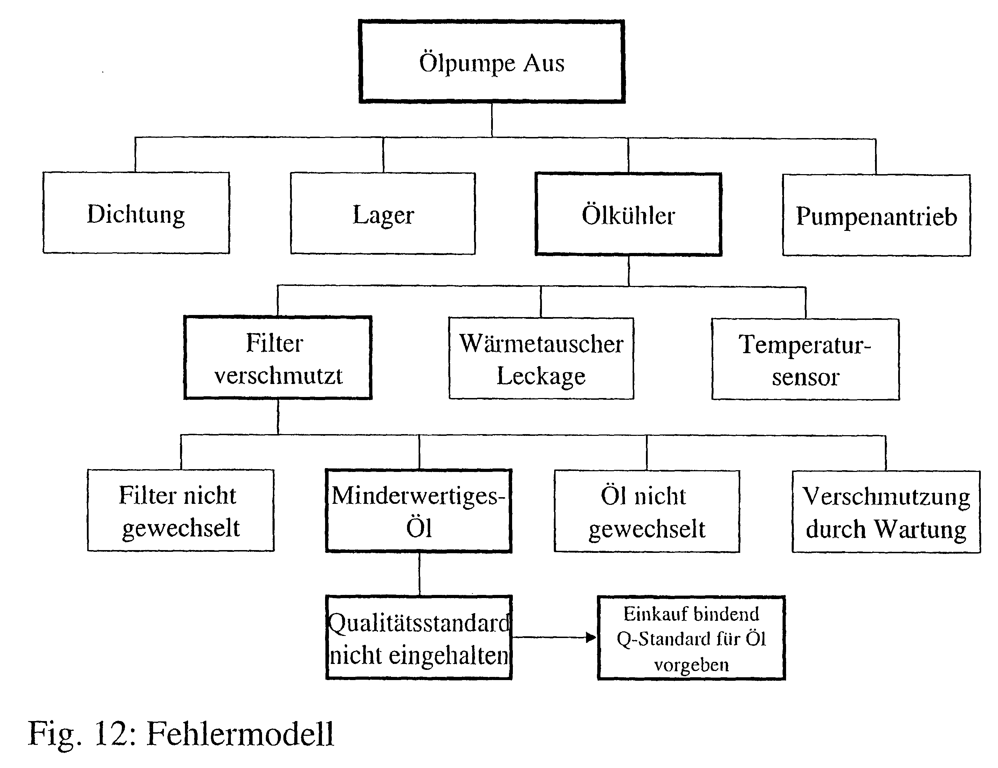

Fig. 12 zeigt ein Fehlermodell zum Fehlerereignis "Ölpumpe Aus". Das Modell basiert auf einer logischen Baumstruktur. Die Box auf der obersten Ebene repräsentiert das Fehlerereignis. Dann folgen mehrere Ebenen von Ursache/Wirkung-Beziehungen. Ursachen können klassifiziert werden in physikalische, menschliche und organisatorische. Das Beispiel zeigt den Pfad vom Fehlerereignis bis zur eigentlichen Ursache: Ölpumpe Aus, Ölkühler, Filter verschmutzt, minderwertiges Öl, Qualitätsstandard nicht eingehalten. Zudem kann das Fehlermodell mit einem Empfehlungsmodell kooperieren. Im Beispiel wird für die Ursache die Empfehlung gegeben, dem Einkauf bindend Qualitätsstandards vorzugeben.

Im Schritt 600 wird das Fehlermodell top-down abgearbeitet. Die Fehlerhypothesen der unterschiedlichen Ebenen werden anhand der vorhandenen Beschreibungsdaten verifiziert. Ist die eigentliche Fehlerursache gefunden, wird zusätzlich zur Ursachenbeschreibung eine Empfehlung zur Behebung dieser Ursache ausgegeben.

Im Schritt 700 werden die Ergebnisse der durchgeführten Ursachenanalyse hinsichtlich einer Wiederverwendbarkeit bewertet. Das Fehlermodell kann durch diese Vorgänge um Ursachen erweitert oder reduziert werden. Das Modell wird anschließend in der Bibliothek abgelegt.

## Patentansprüche

1. System mit
a) einer Datenerfassungseinrichtung (2), die mit einer Produktionsanlage (1) verbunden ist, und die für eine kontinuierliche Erfassung und abrufbereite Speicherung anlagen- und produktionsbezogener Daten eingerichtet ist, und
b) mit einem Online-Systemteil (4), der dafür eingerichtet ist, anlagen- und produktionsbezogene Daten aus der Datenerfassungseinrichtung (2) abzurufen, und mittels eines Fehlerereignis-Detektors (22) auf der Grundlage dieser Daten Fehlerereignisse zu erkennen, **dadurch gekennzeichnet, daß** das System eingerichtet ist zur automatisierten Ermittlung
- der Effektivität (Overall Equipment Effectiveness OEE) von Produktionsanlagen (1) unterschiedlichen Typs,
- von signifikanten Fehlerereignissen, die Abweichungen von einer vorgegebenen Soll-Effektivität bewirken, und
- der Ursachen der signifikanten Fehlerereignisse, wobei
c) das System mittels des Online-Systemteils (4) dafür eingerichtet ist,
- neben der Verwendung der anlagen- und produktionsbezogenen Daten auch mittels Eingabemittel (6,12) eingegebene zusätzliche Beschreibungsdaten zu verwenden, um anhand eines OEE-Skripts (34) durch Grenzwertüberwachung Fehlerereignisse zu erkennen,
- daraus mittels einer Fehlerereignis-Auswertung (23) durch Pareto-Analyse und Verwendung eines konfigurierten Bewertungsmodells (32) signifikante Fehlerereignisse zu ermitteln,
- mittels eines Ursachenermittlers (24) dafür eingerichtet ist, Fehlerursachen durch Verwendung von Fehlerereignisdaten (31) und eines konfigurierten Fehler- und Empfehlungsmodells (33) oder eines Expertensystems zu ermitteln, und
- mittels eines OEE-Berechners (21) unter Verwendung einer gespeicherten OEE-Berechnungsformel die Effektivität zu berechnen,
d) eine - an die Datenerfassungseinrichtung (2) der jeweiligen Produktionsanlage (1) anschließbare - Serviceeinrichtung (3) vorhanden ist, die aufweist:
- die Eingabemittel (6,12) zur Eingabe der zusätzlichen, nicht aus der Datenerfassungseinrichtung (2) abrufbaren anlagen- und produktionsbezogenen Beschreibungsdaten,
- Anzeigemittel (7,11) zur Anzeige der ermittelten Effektivität, der signifikanten Fehlerereignisse (13) und von Fehlerursachen (14),
- sowie den genannten Online-Systemteil (4), und
e) ein Offline-Systemteil (5) vorhanden ist, der mehrere generische Fehler- und Bewertungsmodelle (36) enthält, oder Zugriff auf solche lokal verteilte Modelle (36) hat, und der dafür eingerichtet ist, diese Modelle (36) aufgrund der abgerufenen und/oder eingegebenen Beschreibungsdaten mittels eines Modeilsüchers (27) zu suchen, mittels eines Modellkonfigurierers (25) und eines Modelleditors (15) zu konfigurieren, und als konfigurierte Modelle (35) lokal oder lokal verteilt zu speichern, und daraus abgerufene Modelle im Online-Systemteil (4) entsprechend als konfiguriertes Bewertungsmodell (32) bzw. konfiguriertes Fehlermodell (33) abzulegen.

2. System nach Anspruch 1, **dadurch gekennzeichnet, daß** die Produktionsanlage (1) eine einzelne Maschine oder eine mehrere Maschinen aufweisende Anlage ist.

3. System nach Anspruch 1, **dadurch gekennzeichnet, daß** die Datenerfassungseinrichtung (2) Teil eines Leitsystems oder einer speicherprogrammierbaren Steuerung ist.

4. System nach einem der vorstehenden Ansprüche, **dadurch gekennzeichnet, daß** die Serviceeinrichtung (3) dafür eingerichtet ist, über einen Web-Browser auf Modelle (36) zuzugreifen, die auf einem Web-Server abgelegt sind, und konfigurierte Modelle (35) dort abzulegen.

5. System nach einem der vorstehenden Ansprüche, **dadurch gekennzeichnet, daß** die Serviceeinrichtung (3) dafür eingerichtet ist, Empfehlungen zur Fehlerbehebung zu ermitteln, zu visualisieren und/oder zur Weiterleitung auszugeben.

6. System nach einem der vorstehenden Ansprüche, **dadurch gekennzeichnet, daß** der Offline-Teil (5) zum Finden des besten Modells mittels des Modellsuchers (27) und einer Bibliothek mit generischen Modellen (36) eingerichtet ist, wobei das beste Modell ein Fehlermodell (36) ist, dessen Fehlerereignis-Beschreibung der jeweiligen Suchanfrage am ähnlichsten ist.

7. System nach einem der vorstehenden Ansprüche, **dadurch gekennzeichnet, daß** der Offline-Teit (5) einen Modellgeneralisierer (26) enthält, der konfigurierte Modelle (35) generalisiert und zur Wiederverwendung in der Bibliothek ablegt.

8. System nach einem der vorstehenden Ansprüche, **dadurch gekennzeichnet, daß** es einen Modelleditor (15) enthält, mit dessen Hilfe für den Modellsucher (27) eine Suchanfrage formulierbar ist.

9. Verfahren, bei dem
a) mittels einer Datenerfassungseinrichtung (2), die mit einer Produktionsanlage (1) verbunden ist, eine kontinuierliche Erfassung und abrufbereite Speicherung anlagen- und produktionsbezogener Daten durchgeführt wird, und
b) mittels einem Online-Systemteil (4), der dafür eingerichtet ist, anlagenund produktionsbezogene Daten aus der Datenerfassungseinrichtung (2) abzurufen, und mittels eines Fehlerereignis-Detektors (22) auf der Grundlage dieser Daten Fehlerereignisse erkannt werden, **dadurch gekennzeichnet, daß** eine automatisierte Ermittlung
- der Effektivität (Overall Equipment Effectiveness OEE) von Produktionsanlagen (1) unterschiedlichen Typs,
- von signifikanten Fehlerereignissen, die Abweichungen von einer vorgegebenen Soll-Effektivität bewirken, und
- der Ursachen der signifikanten Fehlerereignisse durchgeführt wird, wobei
c) mittels des Online-Systemteils (4)
- neben der Verwendung der anlagen- und produktionsbezogenen Daten auch mittels Eingabemittel (6,12) eingegebene zusätzliche Beschreibungsdaten verwendet werden, um anhand eines OEE-Skripts (34) durch Grenzwertüberwachung Fehlerereignisse zu erkennen,
- daraus mittels einer Fehlerereignis-Auswertung (23) durch Pareto-Analyse und Verwendung eines konfigurierten Bewertungsmodells (32) signifikante Fehlerereignisse ermittelt werden,
- mittels eines Ursachenermittlers (24) Fehlerursachen durch Verwendung von Fehlerereignisdaten (31) und eines konfigurierten Fehler- und Empfehlungsmodells (33) oder eines Expertensystems ermittelt werden, und
- mittels eines OEE-Berechners (21) unter Verwendung einer gespeicherten OEE-Berechnungsformel die Effektivität berechnet wird, und
- mittels Arizeigemitteln (7,11) die ermittelte Effektivität, signifikante Fehlerereignisse (13) und Fehlerursachen (14) angezeigt werden, und
d) mittels eines Offline-Systemteil (5)
- unter Verwendung mehrerer generische Fehler- und Bewertungsmodelle (36) unter Zugriff auf solche lokal verteilte Modelle (36), diese Modelle (36) aufgrund der abgerufenen und/oder eingegebenen Beschreibungsdaten mittels eines Modellsuchers (27) gesucht werden,
- mittels eines Modellkonfigurierers (25) und eines Modelleditors (15) konfiguriert werden, und als konfigurierte Modelle (35) lokal oder lokal verteilt gespeichert werden, und daraus abgerufene Modelle im Online-Systemteil (4) entsprechend als konfiguriertes Bewertungsmodell (32) bzw. konfiguriertes Fehlermodell (33) abgelegt werden.

10. Verfahren nach Anspruch 9, **dadurch gekennzeichnet, daß** ein Modellsucher (27) verwendet wird, der mittels Beschreibungsdaten in einer Modellbibliothek (36) nach demjenigen generischen Modell sucht, das am besten zu dem speziellen Fehlerereignis und zur Produktionsanlage paßt, und das einem Modelieditor (15) sowie einem Modellkonfigurierer (25) zur Bildung konfigurierter Modelle (35) zugeführt wird, die zur Auswertung von Fehlerereignissen und zur Ursachenanalyse benutzt werden.

11. Verfahren nach Anspruch 10, **dadurch gekennzeichnet, daß** ein Modellsucher (27) verwendet wird, der mittels Beschreibungsdaten in der Modellbibliothek nach demjenigen generischen Modell (36) sucht, das am besten zu dem speziellen Fehlerereignis und zur Produktionsanlage paßt, und das einem Modelleditor (15) sowie einem Modellkonfigurierer (25) zur Bildung konfigurierter Modelle (35) zugeführt wird, die zur Auswertung von Fehlerereignissen und zur Ursachenanalyse benutzt werden.

12. Verfahren nach Anspruch 11, **dadurch gekennzeichnet, daß** zur Ermittlung der Fehlerursachen mittels des Ursachenermittlers (24) von diesem mittels Beschreibungsdaten Ursachenhypothesen des konfigurierten Fehlermodells (35 bzw. 33), das Ursachen-Wirkungsdiagramme enthält, die sich über mehrere Modellebenen erstrecken, verifiziert werden, wobei das Modell schrittweise von einer Ebene zur nächsten abgearbeitet wird, bis die eigentliche Ursache gefunden ist.

13. Verfahren nach einem der Ansprüche 11 oder 12, **dadurch gekennzeichnet, daß** im Rahmen des Verfahrensablaufs konfigurierte Modelle (35) zum Zweck der Wiederverwendung mittels eines Modellgeneralisierers (26) generalisiert und in einer Modellbibliothek (36) abgelegt werden, wobei Bestandteile des jeweiligen Modells (35) generalisiert oder entfernt werden.

## Claims

1. A system with
a) a data acquisition device (2) which is connected with a production facility (1) and which is set up for a continuous collection retrievable storage of plant- and production-specific data, and with
b) an online system part (4) which is set up to retrieve plant- and production-specific data from the data acquisition device (2) and to detect fault events by means of a fault event detector (22) on the basis of said data, **characterized in that** the system is set up for the automatic determination
- of the effectiveness (Overall Equipment Effectiveness OEE) of production facilities (1) of different types;
- of significant fault events which product deviations from a predetermined default effectiveness, and
- of the causes of significant fault events, with
c) the system being set up by means of the online system part (4)
- to use additional description data entered by means of input means (6, 12) in addition to the use of the plant- and production-specific data in order to detect fault events on the basis of an OEE script (34) by boundary value monitoring;
- to determine significant fault events therefrom by means of fault event analysis (23) through Pareto analysis and use of a configured evaluation model (32);
- by means of a cause detector (24) to determine fault causes by using fault event data (31) of a configured fault and recommendation model (33) or an expert system, and
- to calculate the effectiveness by means of an OEE calculator (21) by using a stored OEE calculation formula;
d) a service device (3) being present which can be connected to the data acquisition device (2) of the respective production facility (1) and which comprises:
- the input means (6, 12) for entering the additional plant- and production-specific description data which cannot be retrieved from the data acquisition device (2);
- display means (7, 11) for displaying the determined effectiveness, the significant fault events (13) and fault causes (14),
- as well as the entire online system part (4), and
e) an offline system part (5) being present which comprises several generic fault and evaluation models (36) or has access to such locally distributed models (36) and which is set up to search these models (36) on the basis of the retrieved and/or entered description data by means of a model seeker (27), to configure them by means of a model configurator (25) and a model editor (15), and to store them as configured models (35) locally or in a locally distributed manner, and to store models retrieved therefrom in the online system part (4) accordingly as configured evaluation model (32) or as configured fault model (33).

2. A system according to claim 1, **characterized in that** the production facility (1) is a single machine or a plant comprising several machines.

3. A system according to claim 1, **characterized in that** the data acquisition device (2) is part of a control system or a programmable controller.

4. A system according to one of the preceding claims, **characterized in that** the service device (3) is set up to access models (36) stored on a web server via a web browser and to store configured models (35) there.

5. A system according to one of the preceding claims, **characterized in that** the service device (3) is set up to determine recommendations for fault elimination, to visualize them and/or output them for routing.

6. A system according to one of the preceding claims, **characterized in that** the offline part (5) is set up for finding the best model by means of the model seeker (27) and is set up with a library with generic models (36), with the best model being a fault model (36) whose fault event description is most similar to the search request.

7. A system according to one of the preceding claims, **characterized in that** the offline part (5) comprises a model generalizer (26) which generalizes configured models (35) and stores them for renewed use in the library.

8. A system according to one of the preceding claims, **characterized in that** it comprises a model editor (15) with which a search query can be phrased for the model seeker (27).

9. A method in which
a) a continuous collection and retrievable storage of plant- and production-specific data is performed by means of a data acquisition device (2), and
b) fault events are recognized by means of an online system part (4) which is configured to retrieve plant- and production-specific data from the data acquisition device (2) and by means of a fault event detector (22) on the basis of such data, **characterized in that** an automated determination is performed
- of the effectiveness (Overall Equipment Effectiveness OEE) of production facilities of different types;
- of significant fault events which lead to deviations from a predetermined default effectiveness, and
- of the causes of the significant fault events, with
c) by using the online system part (4)
- additional description data entered by means of input means (6, 12) are used in addition to the use of the plant- and production-specific data in order to recognize fault events on the basis of an OEE script (34) by boundary value monitoring,
- significant fault events are determined therefrom by means of fault event analysis (23) through Pareto analysis and the use of a configured evaluation model (32);
- fault causes are determined by means of a cause detector (24) by using fault event data (31) of a configured fault and recommendation model (33) or an expert system, and
- the effectiveness is calculated by means of an OEE calculator (21) by using a stored OEE calculation formula, and
- the determined effectiveness, the significant fault events (13) and fault causes (14) are displayed by means of display means (7, 11), and
d) by means of an offline system part (5)
- and by using several generic fault and evaluation models (36) under access to such locally distributed models (36) such models (36) are sought by means of a model seeker (27) as a result of the retrieved and/or entered description data;
- are configured by means of a model configurator (25) and a model editor (15), and are stored in a distributed manner locally or in a locally distributed manner as configured models (35), and models retrieved therefrom are stored in the online system part (4) accordingly as configured evaluation model (32) or as configured fault model (33).

10. A method according to claim 9, **characterized in that** a model seeker (27) is used which searches in a model library (36) on the basis of description data for the generic model which best fits the special fault event and the production facility, and supplies it to a model editor (15) and a model configurator (25) for forming configured models (35) which are used for evaluating fault events and cause analysis.

11. A method according to claim 10, **characterized in that** a model seeker (27) is used which searches in a model library on the basis of description data for the generic model which best fits the special fault event and the production facility, and supplies it to a model editor (15) and a model configurator (25) for forming configured models (35) which are used for evaluating fault events and cause analysis.

12. A method according to claim 11, **characterized in that** for determining the fault causes by means of the cause determinator (24) the latter uses description data to verify cause hypotheses of the configured fault model (35 or 33) which contains cause-and-effect diagrams extending over several model levels, with the model being processed in a stepwise manner from one level to the next until the actual cause has been found.

13. A method according to one of the claims 11 or 12, **characterized in that** models (35) configured within the scope of the process sequence are generalized by means of a model generalizer (26) for the purpose of renewed use and are stored in a model library (36), with parts of the respective model (35) being generalized or removed.

## Revendications

1. Système avec :
a) un dispositif d'enregistrement de données (2) communiquant avec une installation de production (1) et conçu en vue d'une saisie en continu et d'une mémorisation pour consultation de données concernant l'installation et la production, et
b) avec une partie de système en ligne (4) conçue pour la consultation de données concernant l'installation et la production à partir du dispositif d'enregistrement de données (2) et pour la reconnaissance d'incidents sur la base de ces données au moyen d'un détecteur d'incidents (22),
**caractérisé en ce que** le système est conçu pour la détection automatique
- de l'efficacité (OEE, Overall Equipment Effectiveness) d'installations de production (1) de différents types,
- des incidents significatifs entraînant des écarts par rapport à une efficacité de consigne prédéterminée, et
- des causes des incidents significatifs,
c) le système étant équipé, au moyen de la partie de système en ligne (4), pour :
- utiliser, outre les données concernant l'installation et la production, des données descriptives supplémentaires entrées au moyen de moyens de saisie (6, 12) pour reconnaître les incidents par surveillance des valeurs limites à l'aide d'un script d'OEE (34),
- déterminer à partir de là les incidents significatifs, au moyen d'une analyse des incidents (23), par analyse de Pareto et utilisation d'un modèle d'évaluation configuré (32),
- pouvoir, au moyen d'un analyseur de causes (24), déterminer les causes d'erreur en utilisant des données d'incident (31) et un modèle d'erreur et de recommandations configuré (33) ou un système expert, et
- calculer l'efficacité au moyen d'un calculateur d'OEE (21), en utilisant une formule de calcul d'OEE conservée en mémoire,
d) un dispositif de maintenance (3) pouvant être raccordé au dispositif d'enregistrement de données (2) de chaque installation de production (1), lequel présente
- les moyens de saisie (6, 12) pour saisir les données descriptives complémentaires concernant l'installation et la production qui ne peuvent pas être consultées dans le dispositif d'enregistrement de données (2),
- des moyens de visualisation (7, 11) pour la visualisation de l'efficacité déterminée, des incidents significatifs (13) et des causes d'erreur (14), et
- ladite partie de système en ligne (4), et
e) un système hors ligne (5) étant prévu, qui contient plusieurs modèles d'erreur et d'évaluation génériques (36) ou peut accéder à ces modèles (36) distribués localement, ou est conçu pour rechercher ces modèles (36) au moyen d'un outil de recherche de modèles (27) sur la base des données descriptives consultées et/ou saisies, pour les configurer au moyen d'un configurateur de modèles (25) et d'un éditeur de modèles (15) et pour les mémoriser localement ou selon une distribution locale sous la forme de modèles configurés (35) et enregistrer les modèles qui en sont issus dans la partie de système en ligne (4) sous la forme d'un modèle d'analyse configuré (32) ou d'un modèle d'erreur configuré (33).

2. Système selon la revendication 1, **caractérisé en ce que** l'installation de production (1) est une machine unique ou une installation comprenant plusieurs machines.

3. Système selon la revendication 1, **caractérisé en ce que** le dispositif d'enregistrement de données (2) fait partie d'un système de contrôle-commande ou d'une commande par automate programmable.

4. Système selon l'une quelconque des revendications précédentes, **caractérisé en ce que** le dispositif de maintenance (3) est conçu pour accéder à l'aide d'un navigateur Web aux modèles (36) déposés sur un serveur Web et pour y enregistrer des modèles configurés (35).

5. Système selon l'une quelconque des revendications précédentes, **caractérisé en ce que** le dispositif de maintenance (3) est conçu de façon à déterminer des recommandations pour la correction des erreurs, les visualiser et/ou les transmettre.

6. Système selon l'une quelconque des revendications précédentes, **caractérisé en ce que** la partie hors ligne (5) est conçue pour rechercher le meilleur modèle au moyen de l'outil de recherche (27) et d'une bibliothèque de modèles génériques (36), le meilleur modèle étant un modèle d'erreur (36) dont la description d'incident est la plus proche de la demande de recherche correspondante.

7. Système selon l'une quelconque des revendications précédentes, **caractérisé en ce que** la partie hors ligne (5) comprend un généralisateur de modèles (26) qui généralise des modèles configurés (35) et les enregistre dans la bibliothèque pour qu'ils soient réutilisés.

8. Système selon l'une quelconque des revendications précédentes, **caractérisé en ce qu'**il contient un éditeur de modèles (15) à l'aide duquel une demande de recherche peut être formulée pour l'outil de recherche de modèles (27).

9. Procédé dans lequel :
a) un dispositif d'enregistrement de données (2) communiquant avec une installation de production (1) exécute une saisie en continu et une mémorisation pour consultation de données concernant l'installation et la production, et
b) les incidents sont reconnus au moyen d'une partie de système en ligne (4) conçue pour la consultation de données concernant l'installation et la production à partir du dispositif d'enregistrement de données (2) et au moyen d'un détecteur d'incidents (22), sur la base de ces données,
**caractérisé en ce qu'**une détection automatique
- de l'efficacité (OEE, Overall Equipment Effectiveness) des installations de production
(1) de différents types, et
- des incidents significatifs entraînant des écarts par rapport à une efficacité de consigne prédéterminée et
- des causes des incidents significatifs est effectuée,
c) dans lequel la partie de système en ligne (4)
- utilise, outre les données concernant l'installation et la production, des données descriptives supplémentaires entrées au moyen de moyens de saisie (6, 12) pour identifier les incidents par surveillance des valeurs limites à l'aide d'un script d'OEE (34),
- détermine à partir de là, au moyen d'une analyse des incidents (23), par analyse de Pareto et utilisation d'un modèle d'évaluation configuré (32), les incidents significatifs,
- détermine, au moyen d'un analyseur de causes (24), les causes d'erreur en utilisant des données d'incident (31) et un modèle d'erreur et de recommandations configuré (33) ou un système expert, et
- calcule l'efficacité au moyen d'un calculateur d'OEE (21), en utilisant une formule de calcul d'OEE conservée en mémoire, et
- des moyens d'affichage (7, 11) affichent l'efficacité déterminée, les incidents significatifs (13) et les causes d'erreur (14), et
d) un système hors ligne (5),
- utilisant plusieurs modèles d'erreur et d'évaluation génériques (36) en accédant à ces modèles (36) distribués localement, recherche ces modèles (36) au moyen d'un outil de recherche de modèles (27) sur la base des données descriptives consultées et saisies,
- les configure au moyen d'un configurateur de modèles (25) et d'un éditeur de modèles (15) et les mémorise localement ou selon une distribution locale sous la forme de modèles configurés (35) et enregistre les modèles qui en sont issus dans la partie de système en ligne (4) sous la forme d'un modèle d'analyse configuré (32) ou d'un modèle d'erreur configuré (33).

10. Procédé selon le revendication 9, **caractérisé en ce qu'**il utilise un outil de recherche de modèles (27) qui recherche au moyen de données descriptives dans une bibliothèque de modèles (36) le modèle générique qui correspond le mieux à l'incident en question et à l'installation de production et qui est transmis à un éditeur de modèles (15) ainsi qu'à un configurateur de modèles (25) pour former des modèles configurés (35) utilisés pour l'évaluation des incidents et pour l'analyse des causes.

11. Procédé selon la revendication 10, **caractérisé en ce qu'**il utilise un outil de recherche de modèles (27) qui recherche au moyen de données descriptives dans la bibliothèque de modèles le modèle générique (36) qui correspond le mieux à l'incident en question et à l'installation de production et qui est transmis à un éditeur de modèles (15) et à un configurateur de modèles (25) pour former des modèles configurés (35) utilisés pour l'évaluation des incidents et pour l'analyse des causes.

12. Procédé selon la revendication 11, **caractérisé en ce qu'**en vue de déterminer les causes d'erreur au moyen de l'analyseur de causes (24), celui-ci vérifie au moyen de données descriptives des hypothèses de causalité du modèle d'erreur configuré (35 ou 33) qui contient des diagrammes d'effet des causes s'étendant sur plusieurs niveaux de modèle, le modèle étant traité par étapes d'un niveau au suivant jusqu'à ce la cause proprement dite soit identifiée.

13. Procédé selon l'une quelconque des revendications 11 ou 12, **caractérisé en ce que** les modèles (35) configurés pendant le processus sont généralisés au moyen d'un généralisateur de modèles (26) afin d'être réutilisés et sont enregistrés dans une bibliothèque de modèles (36), des composants de chaque modèle (35) étant alors généralisés ou supprimés.
